Europäisches Patentamt

**European Patent Office**

Office européen des brevets

(11) Publication number: **0 100 668**
**B1**

(12) **EUROPEAN PATENT SPECIFICATION**

(45) Date of publication of patent specification: **11.05.88**

(51) Int. Cl.⁴: **H 04 L 11/16, H 04 B 3/54**

(21) Application number: **83304412.6**

(22) Date of filing: **29.07.83**

(54) **Data transmission system via power supply line.**

(30) Priority: **30.07.82 JP 133932/82**

(43) Date of publication of application:
**15.02.84 Bulletin 84/07**

(45) Publication of the grant of the patent:
**11.05.88 Bulletin 88/19**

(84) Designated Contracting States:
**DE FR GB IT**

(56) References cited:
**EP-A-0 035 337**
**DE-A-2 844 453**
**GB-A-2 039 402**

(73) Proprietor: **SHARP KABUSHIKI KAISHA**
**22-22 Nagaike-cho Abeno-ku**
**Osaka 545 (JP)**

(72) Inventor: **Machino, Katsuyuki**
**31-101 Higashikidera-cho 1-chome**
**Nara-shi Nara-ken (JP)**
Inventor: **Ise, Masahiro**
**2187-A18-203 Mise-cho**
**Kashihara-shi Nara-ken (JP)**
Inventor: **Tanaka, Hidehiko**
**2613-1 Ichinomoto-cho**
**Tenri-shi Nara-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

The present invention relates to a system for transmitting data via a power supply line, using a high frequency AC signal synchronously mixed with the AC commercial frequency cycle, the system comprising a main unit and a plurality of terminals, and being operable to survey the conditions of the terminals.

It is known to transmit and receive data using signals synchronized with an AC commercial frequency via a power supply line. Such synchronization is easy to achieve, and the technique is effective in offsetting adverse effects from either noise or impedance occurring in synchronism with the AC commercial frequency, and as a result data transmission is rendered stable and reliable.

However, since the data transmitting speed is largely limited by the frequency of AC commercial supply the data tends to be transmitted at an extremely slow speed, i.e., 1 bit per cycle, and accordingly a long period of time is required, for example, for collectively sampling data signals from many terminal units on line by polling.

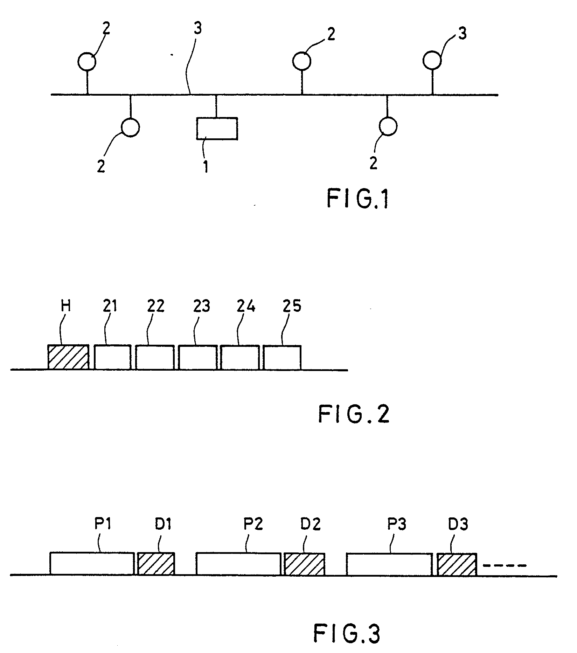

Figure 1 shows a simplified diagram of a conventional data transmission system using an AC power supply line. Central processing unit (CPU) 1 transmits the control command to the terminal units 2 via the power supply line 3 by turning switches on and off to execute the designated operation, for example, On/Off operations for power and illumination, while it usually surveys and displays the operative conditions of respective terminal units 2, for example, current conditions of the power source, illumination, or sensors, or alternatively, it causes an alarm to be generated in case of an emergency. These terminal units 2 incorporate a self-selective function so that each can enter operation only when a respective specific signal is detected.

Actually, there are three signal transmission systems most commonly available. The first is a method of contention, by which signal transmission can be started upon contesting available channel lines as soon as such a need for signal transmission arises. The second is the time division stationary slot allocation system, which, as shown in Figure 2, activates the CPU 1 to output a specific code H in order to establish a system synchronization before either transmitting or receiving data 21 through 25 to and from respective terminal units 2 via the preliminarly allocated slots. The third is the polling system, which, as shown in Figure 3, activates the CPU 1 to output signals P1, P2, and P3, each containing an address signal, while any of the terminal units 2 selected by these signals can feed back any data such as D1, D2, and D3.

In regard to the first contention system, since there is no relationship of synchronization between the CPU 1 and the terminal units 2 and between these terminal units 2 themselves, signals from these may collide with each other, causing a state of confusion to occur and the entire system to eventually malfunction. If this occurs, since a considerable time must be spent before the normal condition is restored, the CPU 1 will be obliged to stop sending any control command until the entire system is back to the normally operative condition. If such a failure occurs, the quick response advantages inherent in such a transmission system will be lost.

The second one, which is the time division stationary slot allocation system, also requires a long time to collect sampling data in each cycle if a large number of terminal units 2 are employed, since the CPU 1 will also be obliged to stop sending the control command until the next data are completely collected.

Conversely, the third one which is the polling system can collect the sampling data within a very short while in each cycle without causing the CPU 1 to stop sending the control command without any waste of time.

On the other hand, if any change should take place in the status of one of these terminal units 2 immediately after the polling system has collected sampling data from that unit 2, such a change cannot be read by the CPU 1 until the sampling data has been collected from all the remaining terminal units 2. It requires a relatively long duration compared to other conventional systems.

GB—2039402 discloses a data transmission system conforming with the third type discussed above. It comprises a central processing unit, a plurality of terminal units connected to the central processing unit over a power line through which high frequency AC signals are synchronously mixed with the AC supply frequency cycle so that such terminals are controlled and interrogated using a polling method. This known system, however suffers the disadvantage mentioned above, namely that it cannot respond quickly to a change in status occurring at a terminal unit immediately after it has been polled.

DE—2844453 discloses a data transmission system which uses a polling technique, and in which there is provided means to permit spontaneously arising data to be transmitted with contention to the central unit after each terminal unit is polled; this is achieved by causing a call to go out to all of the terminal units after each unit polling. A unit at which such spontaneous data is present is deliberately interrogated. In this system, however, the central unit has to generate and transmit call signals to all of the terminal units.

According to the present invention, there is provided a system for transmitting data via an AC power supply line using a high frequency AC signal synchronously mixed with the AC commercial frequency cycle, the system comprising a main unit and a plurality of terminals interconnected by the supply line, the main unit being operable to poll the terminals for transmission of information between the main unit and the terminals, characterised in that after each terminal is polled by a polling signal from the main unit, the terminals are capable of responding to emergency conditions at the respective terminal by transmitting spontaneously and without being interrogated by special interrogation signals from the main unit, an emergency data signal in synchronism with a specific cycle period of the AC power supply via said supply line, and in that means is provided to resolve contention for access to the supply line for transmission of a said emergency data signal by different said terminals.

Thus, whenever terminal wishes to transmit emergency data it does not have to wait until it is polled, neither does it have to rely upon receipt of a specially generated call signal, before signalling its condition to the central unit. It merely awaits the said specific cycle, which it can itself determine, and then transmits said emergency data signal.

Thus, in the disclosed embodiment, after each terminal is polled, all other terminals are capable of transmitting a said emergency data signal (37).

Reference will now be made to the accompanying drawings, in which:

Figure 1 is a schematic diagram of a conventional data transmission system using a power line;

Figure 2 is a timing chart describing the known time division stationary allocation system;

Figure 3 is a timing chart describing the known polling system.

Figure 4 is a simplified block diagram of the composition, including the CPU and terminal units of a system in accordance with the present invention;

Figure 5 is a flowchart describing the operations of the central processing unit in the system of figure 4;

Figure 6 is a flowchart describing the operations of the terminal units in the system of figure 4;

Figure 7 is a timing chart describing the relationship between data samples and the periods for receiving and transmitting a control command in the operation of the system of figures 4 to 6;

Figure 8 is a timing chart describing a typical mode when data is being sampled, and

Figure 9 is a timing chart describing the recovery process when emergency signals collide with one another.

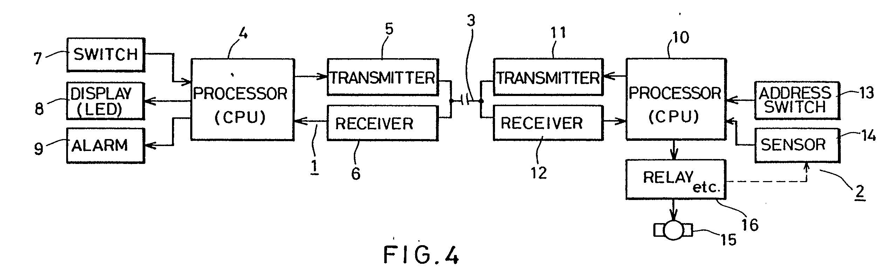

With reference to Figures 4 to 9, a preferred embodiment of the present invention is described below.

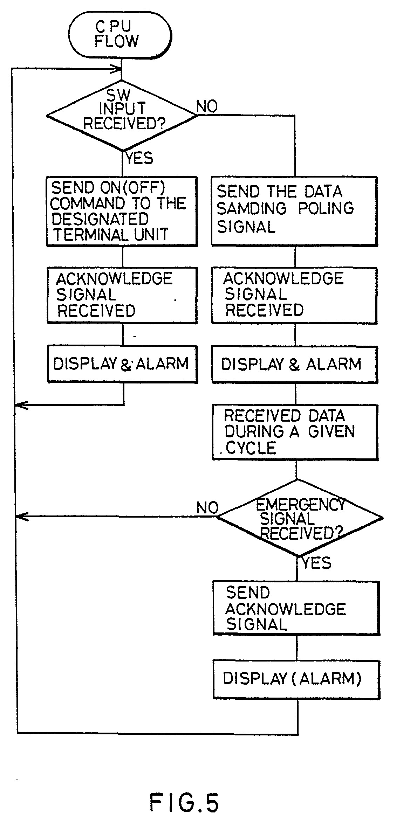

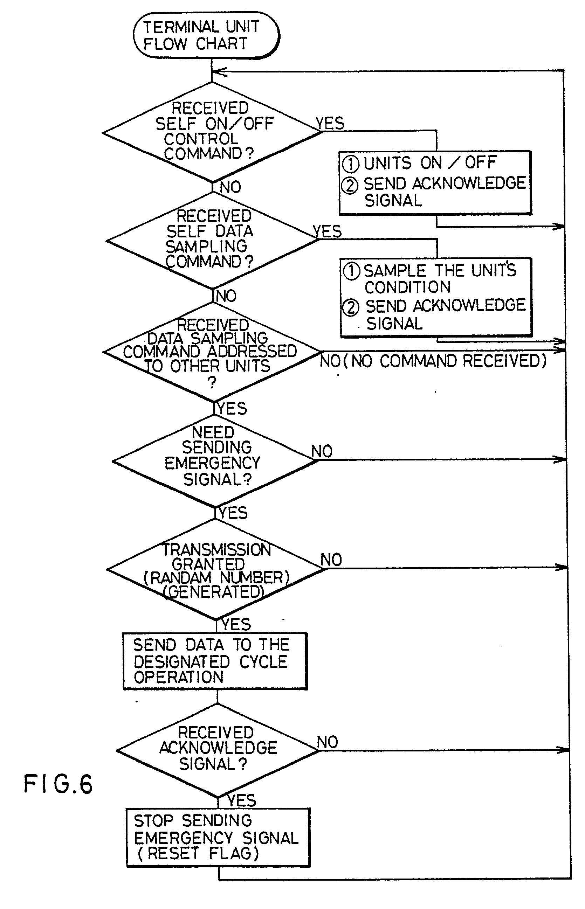

In the system of Figure 4 there is a central processing unit (CPU) 1 and a plurality of terminal units 2. Although there is only one of terminal unit 2 in the drawing, it will be understood that many of them can be connected in the system via the power line 3. Central processing unit 1 comprises a microprocessor 4, a transmitter 5, a receiver 6, a switching unit 7, a display unit 8, and an alarm unit 9. Switching unit 7 has switches instructing every terminal unit to perform ON/OFF operations. Display unit 8 displays the actual status of the connected terminal units 2 by means of LED, CRT, and lamps. Alarm unit 9 generates alarm sound, for example, by buzzer, if any abnormal condition arises at any of the connected terminal units 2. Each of the terminal units 2 is also provided with a microprocessor 10, transmitter 11, and receiver 12. Addressing switch unit 13 provides each terminal unit 2 with a respective address. Sensor unit 14 confirms the operation of such a unit as a motor 15 being controlled by other units. Such a unit 15 as motor is being controlled, for example, by a load controller such as a relay 16 shown in Figure 4, which turns the unit 15 ON and OFF. Figure 5 is a flow-chart describing operations of the central processing unit 1, while Figure 6 is also a flowchart describing operations of the terminal units 2.

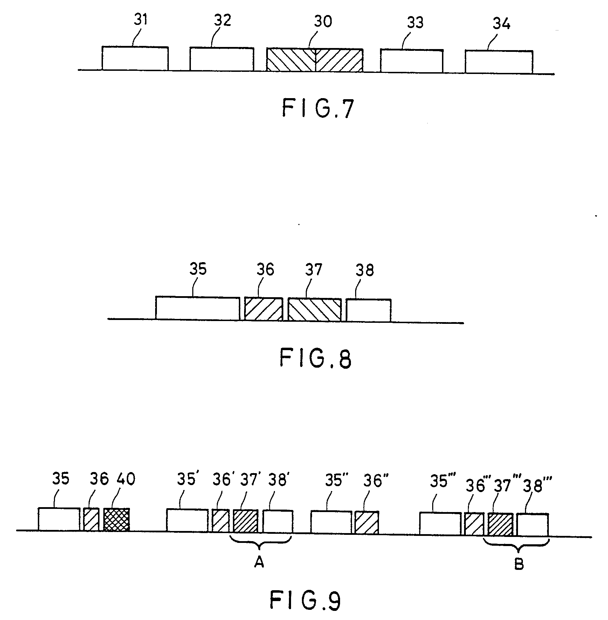

Normally, while no input is being fed from the switching unit 7, the CPU 1 periodically executes a data sampling operation via the polling system as described later on. In Figure 7, symbols 31 to 34 respectively indicate data sampling cycles. If a switch corresponding to any desired terminal unit 2 is operated, ON/OFF control command will be transmitted from the CPU 1 to the designated terminal unit 2 preferentially before any more sampled data is transmitted. Symbol 30 of Figure 7 shows a period in which such a control command is either transmitted or received, and during this period, all the data sampling operations are inhibited, which operations can be restored only after the control command delivery period is terminated.

As soon as the CPU 1 receives an input from the switching unit 7, the CPU outputs the ON/OFF control command to the designated terminal unit 2, which then identifies whether the received ON/OFF control command has been addressed to itself, and if so, it starts to control the ON/OFF operations of the related devices and simultaneously sends out an ACKNOWLEDGE signal to the CPU 1. On receipt of this signal, the CPU 1 decodes its contents and then displays the existing condition of the designated terminal unit 2 in the display unit 8.

The period needed for the delivery of the control command for the ON/OFF operation of the terminal units is as described above, while the time actually needed for waiting until the command signal can be output corresponds to one round of the data sampling cycle, which in effect is a very short time.

Figure 8 shows a timing chart during the data sampling operation, which actually corresponds to one of the cases denoted by symbols 31 through 34 of Figure 7. The data sampling operation is described below with reference to the timing chart of Figure 8 and the flowcharts of Figure 5 and 6.

In Figure 8, symbol 35 indicates a polling signal delivered from the CPU 1 to a specific terminal unit 2. The terminal unit 2 first identifies that the polling signal has been addressed to itself, and then samples the present status for encoding and delivering the answerback signal to the CPU 1 as ACKNOWLEDGE signal 36. Symbol 37 is an emergency signal fed from one of the terminal units 2 other than said specific one, where said emergency signal is output from one of the terminal units in a specific timing after the polling signal 35 has been detected, and using line contention, indicating that an abnormal condition exists in said terminal unit 2. Symbol 38 denotes the ACKNOWLEDGE signal output from the CPU 1 in response to said emergency signal.

Thus, with reference to the righthand sequence flowpath in Fig. 5, CPU 1 receives the ACKNOWLEDGE signal 36 from a designated terminal unit 2 for the polling, then displays the actual state of the terminal unit 2 and if appropriate generates an alarm. The CPU 1 however provides a period for permitting the sampled data to be received during a predetermined cycle. If a data received by the CPU 1 is identified as an emergency signal, the CPU 1 outputs the ACKNOWLEDGE signal 38 to the terminal unit 2 which sent such an emergency signal to the CPU 1. The CPU 1 then changes the display contents and simultaneously generates an alarm. With reference to Fig. 6 it can be seen that if the terminal unit 2 receives an instruction sent by the CPU to other units to deliver the sampled data, it first identifies whether an emergency signal should be output from itself, and if found necessary, it sets flag and outputs the emergency data to a specific cycle position corresponding to the data receiving period of the CPU 1. On receipt of the ACKNOWLEDGE signal 38 from the CPU 1, the terminal unit 2 resets and stops to output such an emergency signal.

Thus, even when the CPU 1 is polling other terminal units 2, such an emergency signal can be output very quickly by using the time slot available for sampling data.

Instead, of sending the ACKNOWLEDGE signal 38 to the terminal unit 2 which delivered an emergency signal the CPU 1 may poll said terminal unit 2. If no emergency signal is generated, there is no exchange of emergency signal between the CPU and any terminal unit, and so they can delete the ACKNOWLEDGE period and proceed immediately to the next data sampling during a specific safety period. Figure 9 shows a chart describing the recovery process from a collision which may have taken place between emergency signals from the two terminal units 2A and 2B. In Figure 9, symbols 35, 35′, 35″, and 35‴ denote the polling signals output from the CPU 1 for normal data sampling operations, whereas symbols 36, 36′, 36″, and 36‴ are the ACKNOWLEDGE data output from the corresponding terminal units 2. All the emergency signals are preliminarily encoded so that they cannot be decoded when collided with each other. Actually, these signals can easily be encoded. For example, when emergency signals A and B collide with each other at the position 40 of Figure 9, since the CPU 1 cannot decode both signals, it executes the polling for sampling the next data by ignoring these emergency signals. As shown in the flowchart of Figure 6, the terminal units 2A and 2B which respectively generated the emergency signals will continuously output emergency signals by any means such as a random delay, if no ACKNOWLEDGE signal is fed from the CPU 1, until they eventually receive the ACKNOWLEDGE signals 38 or until the units themselves are subjected to the polling.

Random delay means enables the system to properly adjust the time needed for waiting to cause the intended operations to be repeatedly performed by using the random digit table. In the embodiment of the present invention, such a random delay operation corresponds to the act of repeating operations while determining whether such an emergency signal should be output during the ensuing polling operations. Using this means, collided emergency signals A and B can eventually be separated to allow only the normal emergency signal to be transmitted. In Figure 9, only the terminal unit A outputs an emergency signal at the position 37′, whereas the unit B outputs an emergency signal at the position 37‴, and as a result, these units A and B respectively receive the ACKNOWLEDGE signals 38′ and 38‴ so that the system can recover from the effect of the collision. According to the simulative operations using a computer, it was confirmed that the mean time can effectively be shortened unless there are many fractional numbers of the collision, although the mean time needed for recovering from the effect of the collision is dependent on the algorithm of the random number generation.

## Claims

1. A system for transmitting data via an AC power supply line (3) using a high frequency AC signal synchronously mixed with the AC commercial frequency cycle, the system comprising a main unit (1) and a plurality of terminals (2) interconnected by the supply line (3), the main unit (1) being operable to poll the terminals (2) for transmission of information between the main unit (1) and the terminals (2), characterised in that after each terminal (2) is polled by a polling signal (37) from the main unit (1), the terminals (2) are capable of responding to emergency conditions at the respective terminal (2) by transmitting spontaneously and without being interrogated by special interrogation signals from the main unit (1), an emergency data signal (37) in synchronism with a specific cycle period of the AC power supply via said supply line (3), and in that means is provided to resolve contention for access to the supply line (3) for transmission of a said emergency data signal by different said terminals.

2. A system according to claim 1 characterised in that after each terminal (2) is polled, all other terminals (2) are capable of transmitting a said emergency data signal (37).

3. A system according to claim 2 characterised in that each terminal (2) includes a microprocessor (10) which is programmed (Fig. 6) to respond to a said polling signal (35) from the main unit addressed to any other terminal to enter a sequence permitting that terminal to transmit a said emergency data signal (37) in synchronism with said specific cycle if required.

4. A system according to any of claims 1 to 3 characterised in that the main unit (1) is responsive to receipt of a said emergency data signal (37) from a given terminal (2) to transmit to that terminal (2) an acknowledgement signal (38), and in that the terminal (2) is responsive to receipt of said acknowledgement signal (38) to terminate transmission of said emergency data signal (37).

5. A system according to any of claims 1 to 3 characterised in that the main unit (1) is responsive to receipt of a said emergency data signal (37) from a given terminal (2) to poll that terminal (2) whereby said terminal (2) transmits data representing its status to the main unit (1).

6. A system according to any preceding claim, characterised in that the main unit (1) includes a display means (8) for displaying the status of the polled terminals (2).

7. A system according to claim 6 characterised in that the main unit (1) is responsive to the receipt of a said emergency data signal (37) to change the content of the display on said display means (8).

8. A system according to any preceding claim characterised in that the main unit (1) includes an alarm means (9) and is responsive to the receipt of a said emergency data signal (37) to cause said alarm means (9) to generate an alarm.

9. A system according to any preceding claim characterised in that the main unit (1) is operable to transmit a control command (30) to said terminal units (2) via said AC power supply line, and in that the polling of the terminals (2) is suspended throughout a command period during which a said control command (30) is transmitted.

10. A system according to claim 9 characterised in that each controllable terminal (2) is responsive to the receipt of a said control command (30) addressed to itself to transmit an acknowledgement signal to the main unit.

**Patentansprüche**

1. Einrichtung zur Datenübertragung über eine AC-Netzleitung (3) unter Verwendung eines synchron mit der Netzfrequenz gemischten Hochfrequenzsignals, wobei die Einrichtung eine Haupteinheit (1) und eine Mehrzahl von durch die Netzleitung (3) miteinander verbundenen Endgeräten (2) aufweist, und die Haupteinheit (1) zum Abruf des Aussendens von Informationen der Endgeräte (2) zwischen der Haupteinheit (1) und den Endgeräten (2) betriebbar ist, dadurch gekennzeichnet, daß die Endgeräte (2) nach Aufruf durch ein Abrufsignal (37) von der Haupteinheit (1) ohne Abfrage durch ein bestimmtes Abfragesignal der Haupteinheit (1) auf einen Störungsfall an dem entsprechenden Endgerät (2) durch spontane Aussendung eines mit einer spezifischen Periode der AC-Spannungsversorgung synchronisierten Störungssignals auf der Netzleitung (3) antworten, und daß Vorrichtungen zur Auflösung des gleichzeitigen Zugriffs auf die Netzleitung (3) zur Aussendung eines Störungssignals durch verschiedene Endgeräte vorgesehen sind.

2. Einrichtung nach Anspruch 1, dadurch gekennzeichnet, daß nach Abruf jedes Endgeräts (2) alle anderen Endgeräte (2) das Störungssignal (37) aussenden.

3. Einrichtung nach Anspruch 2, dadurch gekennzeichnet, daß jedes Endgerät (2) einen Mikroprozessor (10) aufweist, der so programmiert ist (Fig. 6), daß er auf ein Abrufsignal (35) der Haupteinheit, das an irgendein anderes Endgerät adressiert ist, anspricht, um eine Folge einzuspeisen, die es dem Endgerät erforderlichenfalls erlaubt, ein Störungssignal (37) synchron mit der spezifischen Periode auszusenden.

4. Einrichtung nach einem der Ansprüche 1 bis 3, dadurch gekennzeichnet, daß die Haupteinheit (1) auf ein Störungssignal (37) von einem bestimmten Endgerät (2) anspricht und zu diesem Endgerät (2) ein Bestätigungssignal (38) aussendet, und daß das Endgerät (2) auf den Empfang des Bestätigungssignals (38) anspricht, um die Aussendung des Störungssignals (37) zu beenden.

5. Einrichtung nach einem der Ansprüche 1 bis 3, dadurch gekennzeichnet, daß die Haupteinheit (1) auf den Empfang des Störungssignals (37) von einem bestimmten Endgerät (2) anspricht und dieses Endgerät (2) zur Aussendung von Daten zur Haupteinheit (1), die seinen Status anzeigen, aufruft.

6. Einrichtung nach einem der vorhergehenden Ansprüche, dadurch gekennzeichnet, daß die Haupteinheit (1) eine Anzeige (8) zur Wiedergabe der Stati der aufgerufenen Endgeräte (2) aufweist.

7. Einrichtung nach Anspruch 6, dadurch gekennzeichnet, daß die Haupteinheit (1) auf den Empfang des Störungssignals (37) anspricht, um den Inhalt der Anzeige (8) zu ändern.

8. Einrichtung nach einem der vorhergehenden Ansprüche, dadurch gekennzeichnet, daß die Haupteinheit (1) eine Alarmvorrichtung (9) aufweist und auf den Empfang des Störungssignals (37) zur Auslösung eines Alarms anspricht.

9. Einrichtung nach einem der vorhergehenden Ansprüche, dadurch gekennzeichnet, daß die Haupteinheit (1) zur Aussendung eines Steuerbefehls (30) über die AC-Netzleitung zu den Endgeräteeinheiten betreibbar ist, und daß der Abruf eines Endgeräts (2) während einer Befehlsperiode, während der der Steuerbefehl (30) gesendet wird, verbreitet wird.

10. Einrichtung nach Anspruch 9, dadurch gekennzeichnet, daß jedes steuerbare Endgerät (2) auf den Empfang eines an dieses Endgerät adressierten Steuerbefehls (30) anspricht, um ein Bestätigungssignal zur Haupteinheit abzusetzen.

**Revendications**

1. Système pour transmettre des données par l'intermédiaire d'une ligne d'alimentation en énergie à courant alternatif (3) moyennant l'utilisation d'un signal à courant alternatif à haute fréquence mélangé d'une manière synchrone au cycle à fréquence commerciale du courant alternatif, ce système comportant une unité principale (1) et plusieurs terminaux (2) interconnectés par la ligne d'alimentation en énergie (3), l'unité principale (1) pouvant entrer en action pour appeler les terminaux (2) en vue de la transmission d'informations entre l'unité principale (1) et les terminaux (2), caractérisé en ce que, après l'appel de chaque terminal (2) par un signal d'appel (37) émanant de l'unité principale (1), les terminaux (2) sont à même de répondre à des conditions d'urgence dans le terminal respectif (2) en émettant spontanément, et ce sans être interrogés au moyen de signaux particuliers d'interrogation délivrés par l'unité principale (1), un signal de données d'urgence (37) en synchronisme avec une période du cycle spécifique de l'alimentation électrique à courant alternatif, par l'intermédiaire de ladite ligne d'alimentation en énergie (3), et en ce qu'il est prévu des moyens permettant de résoudre un conflit d'accès des divers terminaux à la ligne d'alimentation en énergie (3) pour l'envoi dudit signal de données d'urgence.

2. Système selon la revendication 1, caractérisé en ce qu'après l'appel de chaque terminal (2), tous les autres terminaux (2) sont à même d'émettre un signal de données d'urgence (37).

3. Système selon la revendication 2, caractérisé en ce que chaque terminal (2) comporte un microprocesseur (10) qui est programmé (figure 6) pour répondre audit signal d'appel (35) délivré par l'unité principale et adressé à n'importe quel autre terminal de manière à déclencher une séquence permettant à ce terminal d'émettre un dit signal de données d'urgence (37) en synchronisme avec ledit cycle spécifique, si cela est nécessaire.

4. Système selon l'une quelconque des revendications 1 à 3, caractérisé en ce que l'unité principale (1) répond à la réception d'un signal de données d'urgence (37) provenant d'un terminal (2) donné en envoyant à ce terminal (2) un signal d'accusé de réception (38), et en ce que le terminal (2) répond à la réception dudit signal d'accusé de réception (38) en interrompant l'émission dudit signal de données d'urgence (37).

5. Système selon l'une quelconque des revendications 1 à 3, caractérisé en ce que l'unité principale (1) répond à la réception d'un signal de données d'urgence (37) provenant d'un terminal (2) donné en appelant ce terminal (2), ce qui a pour effet que ledit terminal (2) envoie des données représentant son état à l'unité principale (2).

6. Système selon l'une quelconque des revendications précédentes, caractérisé en ce que l'unité principale (1) comporte des moyens d'affichage (8) servant à afficher l'état des terminaux (2) appelés.

7. Système selon la revendication 6, caractérisé en ce que l'unité principale (1) répond à la réception d'un signal de données d'urgence (37) en modifiant le contenu de l'affichage présenté sur lesdits moyens d'affichage (8).

8. Système selon l'une quelconque des revendications précédentes, caractérisé en ce que l'unité principale (1) comporte des moyens d'alarme (9) et répond à la réception d'un signal de données d'urgence (37) en amenant lesdits moyens d'alarme (9) à produire une alarme.

9. Système selon l'une quelconque des revendications précédentes, caractérisé en ce que l'unité principale (1) peut entrer en action pour transmettre un ordre de commande (30) auxdites unités formant terminaux, par l'intermédiaire de ladite ligne d'alimentation en énergie à courant alternatif, et en ce que l'appel des terminaux (2) est interrompu pendant une période de commande au cours de laquelle ledit ordre de commande (30) est émis.

10. Système selon la revendication 9, caractérisé en ce que chaque terminal commandable (1) répond à la réception d'un ordre de commande (30), qui lui est adressé, en envoyant un signal d'accusé de réception à l'unité principale.

FIG.1

FIG.2

FIG.3

FIG.4

ADDRESS SWITCH — 13

SENSOR — 14

2

PROCESSOR (CPU) — 10

RELAY etc. — 16

15

TRANSMITTER — 11

RECEIVER — 12

3

TRANSMITTER — 5

RECEIVER — 6

1

PROCESSOR (CPU) — 4

SWITCH — 7

DISPLAY (LED) — 8

ALARM — 9

FIG.5

FIG.6

31    32    30    33    34

F I G.7

35    36    37    38

F I G.8

35  36  40    35´  36´ 37´ 38´    35˝  36˝    35‴  36‴ 37‴ 38‴

A                          B

F I G.9

5